(19) **Europäisches Patentamt**
**European Patent Office**
**Office européen des brevets**

(11) **EP 3 020 842 B1**

(12) **EUROPEAN PATENT SPECIFICATION**

(45) Date of publication and mention
of the grant of the patent:
**13.03.2019 Bulletin 2019/11**

(51) Int Cl.:
*C22C 38/00* (2006.01)  *C21D 9/48* (2006.01)
*C22C 38/60* (2006.01)  *C23C 2/06* (2006.01)
*C23C 2/40* (2006.01)  *C21D 1/74* (2006.01)
*C21D 6/00* (2006.01)  *C21D 8/02* (2006.01)
*C21D 9/46* (2006.01)  *C21D 9/56* (2006.01)
*C22C 38/02* (2006.01)  *C22C 38/04* (2006.01)
*C22C 38/06* (2006.01)  *C22C 38/08* (2006.01)
*C22C 38/12* (2006.01)  *C22C 38/14* (2006.01)
*C22C 38/16* (2006.01)  *C22C 38/28* (2006.01)
*C23C 2/02* (2006.01)  *C23C 28/00* (2006.01)

(21) Application number: **14823492.5**

(22) Date of filing: **02.07.2014**

(86) International application number:
**PCT/JP2014/067663**

(87) International publication number:
**WO 2015/005191 (15.01.2015 Gazette 2015/02)**

(54) **HIGH-STRENGTH PLATED STEEL SHEET HAVING SUPERIOR PLATING PROPERTIES, WORKABILITY, AND DELAYED FRACTURE RESISTANCE, AND METHOD FOR PRODUCING SAME**

HOCHFESTES PLATTIERTES STAHLBLECH MIT HERVORRAGENDEN PLATTIERUNGSEIGENSCHAFTEN, BEARBEITBARKEIT UND VERZÖGERTER BRUCHFESTIGKEIT UND VERFAHREN ZUR HERSTELLUNG DAVON

TÔLE D'ACIER PLAQUÉE À HAUTE RÉSISTANCE AYANT DES PROPRIÉTÉS DE PLACAGE, UNE APTITUDE À LA MISE EN UVRE ET UNE RÉSISTANCE À LA RUPTURE DIFFÉRÉE SUPÉRIEURES ET PROCÉDÉ POUR LA PRODUCTION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2013  JP 2013147031**
**28.03.2014  JP 2014068539**

(43) Date of publication of application:
**18.05.2016  Bulletin 2016/20**

(73) Proprietor: **Kabushiki Kaisha Kobe Seiko Sho (Kobe Steel, Ltd.)**
**Kobe-shi, Hyogo 651-8585 (JP)**

(72) Inventors:
• **IKEDA, Muneaki**
**Kakogawa-shi**
**Hyogo 675-0137 (JP)**

• **NAKAYA, Michiharu**
**Kakogawa-shi**
**Hyogo 675-0137 (JP)**

(74) Representative: **Müller-Boré & Partner**
**Patentanwälte PartG mbB**
**Friedenheimer Brücke 21**
**80639 München (DE)**

(56) References cited:
**WO-A1-2011/025042    WO-A1-2013/100615**
**CA-A1- 2 850 195     JP-A- H09 310 148**
**JP-A- H10 130 782    JP-A- H10 130 782**
**JP-A- 2007 211 279   JP-A- 2007 211 279**
**JP-A- 2008 024 972**

**Description**

The present invention relates to a high-strength plated steel sheet having a tensile strength of 980 MPa or more and excellent in plating properties, workability including both bending workability and hole expandability, and delayed fracture resistance, and to a method for producing the high-strength plated steel sheet. The plated steel sheets according to the present invention include a hot-dip galvanized steel sheet and an alloyed hot-dip galvanized steel sheet.

A hot-dip galvanized steel sheet and an alloyed hot-dip galvanized steel sheet, which are generally used for various fields including automobiles and aircrafts, are required of having high strength and being excellent in workability including bending workability and hole expandability (stretch flange formability), and delayed fracture resistance. These sheets are also required of being excellent in shock absorption.

To obtain high strength and excellent workability, it is effective to add a large amount of a strengthening element such as Si or Mn to steel. However, Si and Mn are easily oxidized, and a Si oxide or a Mn oxide, for example, formed in a surface significantly degrades wettability of hot-dip galvanizing, leading to problems such as unplating.

To solve such problems, various techniques have been proposed for enhancing workability and other properties of a plated steel sheet containing a large amount of Si or Mn.

Patent Document 1, for example, discloses a hot-dip galvanized steel sheet having a tensile strength of 590 MPa or more and excellent in bendability and corrosion resistance of a processed portion. Specifically, in Patent Document 1, a decarburization layer is grown much faster than an internal oxide layer to suppress occurrence of flex crack and damage of a plated coating due to formation of the internal oxide layer grown on a steel sheet side of an interface between the steel sheet and the plated layer. Patent Document 1 also discloses a near-surface structure controlled to have a reduced thickness of the internal oxide layer in a ferrite region formed by decarburization.

Patent Document 2 discloses a hot-dip galvanized steel sheet having a tensile strength of 770 MPa or more and excellent in fatigue durability, hydrogen embrittlement resistance (equivalent to delayed fracture resistance), and bendability. More specifically, in Patent Document 2, a steel sheet portion has a structure including a soft layer that directly adjoins an interface with a plated layer and a soft layer having a structure in which a ferrite structure has a maximum area ratio. Patent Document 2 also discloses a hot-dip galvanized steel sheet in which a thickness D of the soft layer and a depth d of an oxide present in a surface layer of the steel sheet and including at least one of Si or Mn from a plate/ferrite interface satisfy a relationship of $d/4 \leq D \leq 2d$.

Patent Document 1: Japanese Unexamined Patent Publication No. 2011-231367
Patent Document 2: Japanese Patent No. 4943558

CA 2 850 195 A1 discloses a high-strength hot-dip galvanized steel sheet and a manufacturing method thereof, and further discloses a high-strength alloyed hot-dip galvanized steel sheet and a manufacturing method thereof.

As described above, various techniques have been proposed to enhance workability and other properties of plated steel sheets including large amounts of Si and Mn. However, further techniques are demanded for providing all the various properties required for such plated steel sheets, i.e., a high strength of 980 MPa or more, excellent plating properties, excellent workability including bending workability and hole expandability, high delayed fracture resistance, and excellent shock absorption.

The present invention has been made in view of the foregoing problems, and has an object of providing a hot-dip galvanized steel sheet and an alloyed hot-dip galvanized steel sheet each having a tensile strength of 980 MPa or more, excellent in plating properties, workability including bending workability and hole expandability, delayed fracture resistance, and shock absorption, and a method for producing these plated steel sheets.

A high-strength plated steel sheet having a tensile strength of 980 MPa or more according to the present invention that has solved the problems described above is a plated steel sheet having a hot-dip galvanized layer or an alloyed hot-dip galvanized layer on a surface of a base steel sheet, and has features in which (1) the base steel sheet contains, by mass %, C: 0.05 to 0.25%, Si: 0.5 to 2.5%, Mn: 2.0 to 4%, P: greater than 0% and less than or equal to 0.1%, S: greater than 0% and less than or equal to 0.05%, Al: 0.01 to 0.1%, and N: greater than 0% and less than or equal to 0.01%, optionally, at least a material selected from the group consisting of Cr: greater than 0% and less than or equal to 1%, Mo: greater than 0% and less than or equal to 1%, B: greater than 0% and less than or equal to 0.01%, Ti: greater than 0% and less than or equal to 0.2%, Nb: greater than 0% and less than or equal to 0.2%, V: greater than 0% and less than or equal to 0.2%, Cu: greater than 0% and less than or equal to 1%, and Ni: greater than 0% and less than or equal to 1%, a balance of the base steel sheet consisting of an iron and inevitable impurities, (2) the base steel sheet includes, in order from a base steel sheet side of an interface between the base steel sheet and the plated layer, a soft layer having a Vickers hardness under a load of 3 gf of 90% or less of a Vickers hardness under a load of 3 gf of a t/4 portion of the base steel sheet, where t is a thickness of the base steel sheet, and a hard layer formed on the side of the soft layer facing the inner side of the base steel sheet and having a structure containing martensite and bainite as main components, the soft layer has an average depth D of 20 $\mu$m or more and includes an internal oxide layer containing at least an oxide selected from the group consisting of Si and Mn, the internal oxide layer has an average depth d of 4 $\mu$m or more and less than D and is formed in a portion directly in contact with the interface between the base steel sheet and the plated layer, the average depth d of the internal oxide layer and the average depth D of the soft layer satisfy a relationship of D > 2d.

A production method according to the present invention that can solve the problems described above is a method for producing one of the high-strength plated steel sheets described above, and has a feature in including: a hot rolling step of coiling a steel sheet to be hot rolled satisfying the steel compositions described above in the base steel sheet at 600°C or more to form an internal oxide layer in a surface of the base steel sheet; a step of pickling and cold rolling the steel sheet under a condition of a concentration of a pickling solution from 3 to 20%, a temperature of the pickling solution from 60 to 90°C, a pickling time from 35 to 200 seconds, and a cold rolling percentage from 20 to 70% to remain the internal oxide layer having an average depth d of 4 $\mu$m or more; a step of oxidizing the steel sheet at an air-fuel ratio of 0.9 to 1.4 in an oxidizing zone; and a step of soaking the steel sheet in a range from point $Ac_3$ to point $Ac_3$ + 100°C under a reducing atmosphere with a dew point controlled to -30 to -60°C in a reducing zone, wherein these steps are performed in this order.

A production method according to the present invention that has solved the problems described above is a method for producing one of the high-strength plated steel sheets described above, and has a feature in including: a hot rolling step of coiling a steel sheet to be hot rolled satisfying the steel compositions described above in the base steel sheet at 500°C or more; a step of keeping a temperature of the steel sheet at 500°C or more for 80 minutes or longer to form an internal oxide layer in a surface of the base steel sheet; a step of pickling and cold rolling the steel sheet under a condition of a concentration of a pickling solution from 3 to 20%, a temperature of the pickling solution from 60 to 90°C, a pickling time from 35 to 200 seconds, and a cold rolling percentage from 20 to 70% to remain the internal oxide layer having an average depth d of 4 $\mu$m or more; a step of oxidizing the steel sheet at an air-fuel ratio of 0.9 to 1.4 in an oxidizing zone; and a step of soaking the steel sheet in a range from point $Ac_3$ to point $Ac_3$ + 100°C under a reducing atmosphere with a dew point controlled to -30 to -60°C in a reducing zone, wherein these steps are performed in this order.

The plated steel sheet according to the present invention includes, from the base steel sheet side of the interface between the plated layer and the base steel sheet: an internal oxide layer containing at least an oxide selected from the group consisting of Si and Mn; a soft layer including a region of the internal oxide layer; and a hard layer other than the soft layer and containing martensite and bainite as main components. In particular, the internal oxide layer is controlled to have a large average depth d of 4 $\mu$m or more and is used as a hydrogen trap site. Thus, a high-strength plated steel sheet having a tensile strength of 980 MPa or more, capable of effectively suppressing hydrogen embrittlement, and excellent in workability such as bending workability and hole expandability, and delayed fracture resistance. Herein, a relationship between the average depth d of the internal oxide layer and the average depth D of the soft layer including the internal oxide layer is appropriately controlled. Thus, especially bending workability and delayed fracture resistance can be further reduced.

**Brief Description of Drawings**

FIG. 1 schematically illustrates a layer structure of a plated steel sheet according to the present invention formed on a base steel sheet side of an interface between a plated layer and a base steel sheet.

FIG. 2 is a graph showing measurement of an average depth d of an internal oxide layer in the plated steel sheet of the present invention.

FIG. 3 illustrates locations of measurement of Vickers hardnesses used for determining an average depth D of a soft layer.

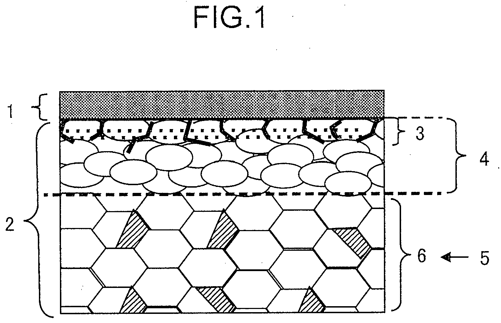

To provide a high-strength plated steel sheet having a high strength of 980 MPa or more and excellent in plating properties, workability, delayed fracture resistance, and shock absorption in a base steel sheet containing large amounts of Si and Mn, inventors of the present invention have investigated a layer structure, especially a structure on a base steel sheet side of an interface between a plated layer and a base steel sheet. Consequently, as illustrated in a schematic view of FIG. 1 described later, desired objects can be achieved because the internal oxide layer is allowed to function as a hydrogen trap site and hydrogen embrittlement can be effectively suppressed by (I) forming a layer structure on the base steel sheet side of the interface between the plated layer and the base steel sheet in such a manner that the layer structure includes a soft layer including an internal oxide layer containing at least an oxide selected from the group consisting of Si and Mn and a hard layer other than the soft layer and containing martensite and bainite as main components and (II) controlling an average depth d of the internal oxide layer to 4 $\mu$m or more. (III) Herein, a relationship between the average depth d of the internal oxide layer and an average depth D of a soft layer including a region of the internal oxide layer is appropriately controlled. Then, especially bending workability and delayed fracture resistance can be further enhanced. Thus, the present invention has been completed.

Definition of a plated steel sheet herein includes both a hot-dip galvanized steel sheet and an alloyed hot-dip galvanized steel sheet. A base steel sheet herein refers to a steel sheet before a hot-dip galvanized layer or an alloyed hot-dip galvanized layer is formed, and is distinguished from the plated steel sheet.

High strength herein refers to a tensile strength of 980 MPa or more.

The term "excellent in workability" herein refers to excellent in both bending workability and hole expandability. Properties satisfying acceptable standards of examples described later when being measured by methods described in the examples will be referred to as properties "that are excellent in workability."

As described above, a plated steel sheet according to the present invention includes a hot-dip galvanized layer or an alloyed hot-dip galvanized layer (which will be sometimes represented by a plated layer) in a surface of a base steel sheet. The present invention is characterized by including the following layer structures (A) to (C) disposed in this order on the base steel sheet side of the interface between the base steel sheet and the plated layer.

(A) Internal oxide layer: a layer including at least an oxide selected from the group consisting of Si and Mn. An internal oxide layer 3 has an average depth d of 4 $\mu$m or more and less than an average depth D of a soft layer described in (B).

(B) Soft layer: a soft layer including the internal oxide layer and having a Vickers hardness of 90% or less of a Vickers hardness of a t/4 portion of the base steel sheet, where t is a thickness of the base steel sheet. The soft layer has an average depth D of 20 $\mu$m or more.

(C) Hard layer: a hard layer has a structure containing martensite and bainite as main components. The term "main components" herein means that a total area ratio of bainite and martensite is 80 area % or more and an area ratio of ferrite is greater than or equal to 0 area % and less than or equal to 5 area % when measuring fractions of the structure in a method described in the examples later.

Referring now to FIG. 1, the layer structures (A) to (C), which are features of the present invention, will be specifically described in order. As illustrated in FIG. 1, as layer structures of a base steel sheet 2 of a plated steel sheet according to the present invention, a soft layer 4 described in (B) and a hard layer 5 described in (C), located in an inner portion 6 of the base steel sheet 2, and closer to the inside of the base steel sheet 2 than the soft layer 4 are disposed in this order in the base steel sheet 2 from an interface between the plated layer 1 and the base steel sheet 2. Here, the soft layer 4 described in (B) includes an internal oxide layer 3 described in (A). The hard layer 5 only needs to be present in the inner portion 6, and the form of the inner portion 6 is not specifically limited as long as requirements for the hard layer 5 described later are satisfied. Thus, the soft layer 4 and the hard layer 5 may be continuous or discontinuous.

(A) Internal Oxide Layer

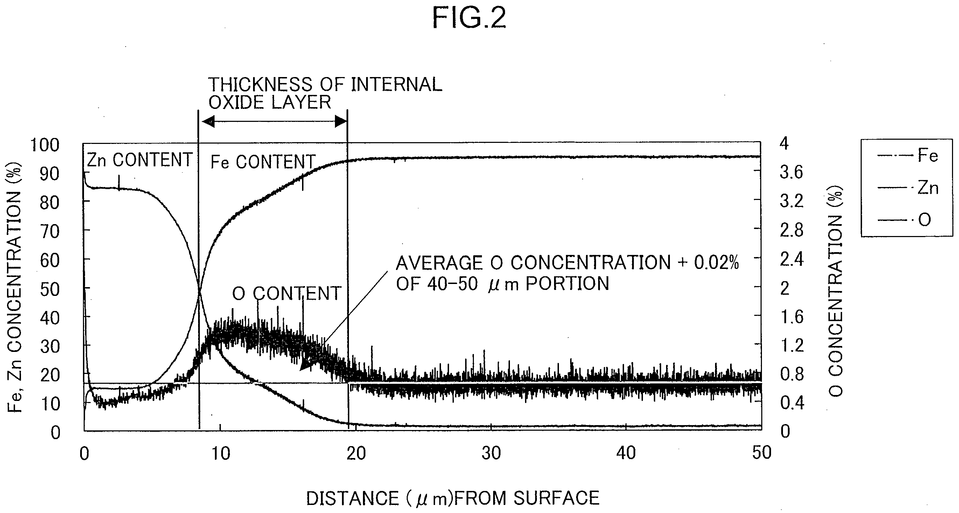

First, the internal oxide layer 3 having an average depth d of 4 $\mu$m or more is formed in a portion directly in contact with the interface between the plated layer 1 and the base steel sheet 2. The average depth herein refers to an average depth from the interface, and a specific method for measuring the depth will be described in the examples described later with reference to FIG. 2.

The internal oxide layer 3 includes an oxide containing at least one of Si and Mn and a depletion layer of Si and Mn around which small amounts of a Si solid solution and a Mn solid solution are present because of formation of an oxide by Si and/or Mn.

A principal feature of the present invention is in controlling the average depth d of the internal oxide layer 3 to 4 $\mu$m or more. With this feature, the internal oxide layer can be used as a hydrogen trap site so that hydrogen embrittlement can be suppressed and bending workability, hole expandability, and delayed fracture resistance can be enhanced.

In a base steel sheet including a large amount of easily oxidizable elements, such as Si and Mn, as that according to the present invention, a composite oxide film of Si and Mn is easily formed in a surface of the base steel sheet in annealing (an oxidation and reduction step in a continuous galvanizing line described later), and degrades plating properties. In a known method for preventing the degradation, the surface of the base steel sheet is oxidized in an oxidation atmosphere to form an Fe oxide film, and then annealing (reduction annealing) is performed in an atmosphere containing hydrogen. In another known method, formation of an oxide film in a surface of a base steel sheet containing easily oxidizable elements is prevented by controlling a furnace atmosphere to fix the easily oxidizable elements as an oxide in the surface layer of the base steel sheet and, thereby, reducing the amount of easily oxidizable elements forming a solid solution in the surface layer of the base steel sheet.

Results of investigation by the inventors, however, show that in an oxidation reduction method generally employed for plating a base steel sheet including large amounts of Si and Mn, the use of at least an oxide selected from the group consisting of Si and Mn is effective for improving degradation of bendability and hole expandability due to hydrogen embrittlement caused by entering of hydrogen into the base steel sheet in an hydrogen atmosphere in reduction. Specifically, the use of the oxide is effective as a hydrogen trap site that can prevent hydrogen from entering the inside of the base steel sheet in reduction and can improve bendability, hole expandability, and delayed fracture resistance. To effectively obtain this advantage, it is necessary to increase the average depth d of the internal oxide layer containing the oxide to 4 $\mu$m or more.

In the present invention, the maximum average depth d of the internal oxide layer is at least less than the average depth D of the soft layer described in (B) described later. The maximum d is preferably less than or equal to 30 $\mu$m. To increase the thickness of the internal oxide layer, the internal oxide layer needs to be held at high temperatures for a long time after hot rolling and coiling, and the above-described preferable range is determined under constraints of productivity and facilities. The depth d is more preferably less than or equal to 18 $\mu$m, and much more preferably less than or equal to 16 $\mu$m. The depth d is preferably greater than or equal to 6 $\mu$m and more preferably greater than or equal to 8 $\mu$m.

In the present invention, the average depth d of the internal oxide layer is controlled to satisfy D > 2d in a relationship with the average depth D of the soft layer described in (B). In this manner, bending workability and delayed fracture resistance, especially bending workability, can be further enhanced. On the other hand, Patent Document 2 described above discloses a hot-dip galvanized steel sheet satisfying d/4 $\leq$ D $\leq$ 2d for a depth d in which the oxide is present and a thickness D of a soft layer, substantially corresponding to the average depth d of the internal oxide layer and the average depth D of the soft layer of the present invention. The relationship satisfied in Patent Document 2 is totally different in direction of control from the relationship (D > 2d) defined in the present invention. Patent Document 2 basically describes that the range of the depth d in which the oxide is present with the above-described relationship d/4 $\leq$ D $\leq$ 2d being satisfied, and does not have any basic concept of controlling the average depth d of the internal oxide layer to 4 $\mu$m or more, unlike the present invention. Of course, Patent Document 2 fails to describe advantages of the present invention, i.e., an effective function as a hydrogen trap site and enhancement of bending workability, hole expandability, and delayed fracture resistance.

In the present invention, to control the average depth d of the internal oxide layer to 4 $\mu$m or more, the average depth of the internal oxide layer in the cold-rolled steel sheet before being threaded in the continuous galvanizing line needs to be controlled to 4 $\mu$m or more. This will be more specifically described in the section of a producing method. Specifically, as described in the examples later, the internal oxide layer after pickling and cold rolling is taken over to a final internal oxide layer in a plated steel sheet finally obtained after plating line threading.

(B) Soft Layer

In the present invention, as illustrated in FIG. 1, the soft layer 4 is a layer including a region of the internal oxide layer 3 described in (A), and has a Vickers hardness of 90% or less of a Vickers hardness of a t/4 portion of the base steel sheet 2. A specific method for measuring the Vickers hardness will be described in the examples later.

The soft layer has a soft structure having a Vickers hardness lower than that of the hard layer described in (C) described later, and has excellent deformability, and thus, especially provides an enhanced bending workability. That is, in a bending process, cracks occur from a surface layer portion of the base steel sheet, and a predetermined soft layer formed in a surface of the base steel sheet as described in the present invention can especially enhance bending workability. In addition, the formation of the soft layer can prevent the oxide in (A) from serving as an origin of cracks in the bending process, and only advantages as the hydrogen trap site described above can be obtained. As a result, delayed fracture resistance as well as bending workability can be further enhanced.

To effectively obtain advantages by formation of such a soft layer, the average depth D of the soft layer is 20 $\mu$m or more. The depth D is preferably greater than or equal to 22 $\mu$m, and more preferably 24 $\mu$m or more. On the other hand, an excessively large average depth D of the soft layer will reduce the strength of the plated steel sheet itself. Thus, the maximum average depth D is preferably less than or equal to 100 $\mu$m. The depth D is more preferably less than or equal to 60 $\mu$m.

(C) Hard Layer

In the present invention, as illustrated in FIG. 1, the hard layer is formed on the side of the soft layer 4 described in (B) facing the inner side of the base steel sheet 2 and has a structure containing martensite and bainite as main components. Martensite in the hard layer 5 may be tempered. The term "main components" herein means that a total area ratio of bainite and martensite is 80 area % or more and an area ratio of ferrite is greater than or equal to 0 area % and less than or equal to 5 area % with respect to the total structure when measuring fractions of the structure with a method described in the examples described later. The total area ratio of bainite and martensite in the hard layer is preferably as high as possible, and is preferably greater than or equal to 93 area %. On the other hand, the area ratio of ferrite is preferably as low as possible, is preferably less than or equal to 5 area %, more preferably less than or equal to 3 area %, and most preferably 0 area %.

In addition to the above-described structure, the hard layer may further contain possible elements inevitably contained in fabrication, such as residual γ and pearlite, within a range not impairing advantages of the present invention. The amount of these elements is less than or equal to 15 area % at most, and is preferably as small as possible. The elements are indicated as "Others" in Table 2 below.

The formation of the hard layer enhances bending workability and hole expandability. Specifically, flex cracks and cracks caused by hole expansion are generally due to stress concentrated at an interface between a soft phase such as ferrite and a hard phase such as martensite and bainite. Thus, to suppress occurrence of the cracks, it is necessary to reduce a difference in hardness between the soft phase and the hard phase. In view of this, according to the present invention, the content of soft ferrite in the structure of the base steel sheet is reduced to 5 area % or less at most so that the hard layer contains bainite and martensite as main components. Since the content of ferrite in the hard layer is reduced, a yield ratio (YR) increases and, thus, shock absorption is enhanced.

The hard layer according to the present invention only needs to contain bainite and martensite as main components, and the contents of bainite and martensite are not specifically limited. This is because the advantages described above obtained by forming the hard layer can be achieved as long as the above-described requirements are satisfied in the present invention. Thus, the hard layer can satisfy all the relationships: bainite > martensite; bainite = martensite; and bainite < martensite as long as the above-described requirements are satisfied. The scope of the present invention includes both a case where the hard layer is made of bainite only and does not contain martensite and an opposite case where the hard layer is made of martensite only and does not contain bainite. In view of the foregoing, in the examples below, bainite and martensite are not distinguished from each other in observation, and only a total area of bainite and martensite is measured. Results of the measurement are shown in Table 3.

The layer structure formed on the base steel sheet side of the interface between the plated layer and the base steel sheet has been described as a principal feature of the present invention.

Steel compositions employed in the present invention will now be described.

The base steel sheet of the present invention includes C: 0.05 to 0.25%, Si: 0.5 to 2.5%, Mn: 2.0 to 4%, P: greater than 0% and less than or equal to 0.1%, S: greater than 0% and less than or equal to 0.05%, Al: 0.01 to 0.1%, and N: greater than 0% and less than or equal to 0.01%, and a balance consists of an iron and inevitable impurities.

C: 0.05 to 0.25%

C is an element that enhances quenching and is important for strengthening steel because of an effect of hardening by martensite. To effectively obtain such an effect, the lower limit of the C content is greater than or equal to 0.05%. The lower limit of the C content is preferably greater than or equal to 0.08%, and more preferably greater than or equal to 0.10%. However, an addition of an excessively large amount of C will increases a difference in hardness between the soft phase and the hard phase to degrade workability and delayed fracture resistance. Thus, the upper limit of the C content is 0.25%. The upper limit of the C content is preferably less than or equal to 0.2%, and more preferably less than or equal to 0.18%.

Si: 0.5 to 2.5%

Si is an element that enhances strength of steel because of solid solution strengthening and is also effective for workability. In addition, Si constitutes the internal oxide layer and suppresses hydrogen embrittlement. To effectively obtain such effects, the lower limit of the Si content is greater than or equal to 0.5%. The lower limit of the Si content is preferably greater than or equal to 0.75%, and more preferably greater than or equal to 1%. However, Si is a ferrite-forming element, and an excessive addition of Si cannot suppress generation of ferrite, increases a difference in hardness between the soft phase and the hard phase to degrade workability. In addition, plating properties are also degraded. Thus, the upper limit of the Si content is 2.5%. The upper limit of the Si content is preferably less than or equal to 2%, and more preferably less than or equal to 1.8%.

Mn: 2.0 to 4%

Mn is a quenching-enhancing element, reduces ferrite and bainite, and generates martensite, thereby contributing strengthening. To effectively obtain such effects, the lower limit of the Mn content is greater than or equal to 2.0%. The lower limit of the Mn content is preferably greater than or equal to 2.3%, and more preferably greater than or equal to 2.5%. However, an excessive addition of Mn will degrade plating properties and cause serious segregation. In addition, particle boundary segregation of P might be promoted. In view of these, the upper limit of the Mn content is 4%. The upper limit of the Mn content is preferably less than or equal to 3.5%.

P: greater than 0% and less than or equal to 0.1%

P is a solid solution strengthening element and is effective for strengthening steel. To effectively obtain such an effect, the lower limit of the P content is greater than 0%. However, an excessive addition of P might degrade weldability and toughness as well as workability. In view of this, the upper limit of the P content is less than or equal to 0.1%. The P content is preferably as low as possible, is preferably less than or equal to 0.03%, and more preferably less than or equal to 0.015%.

S: greater than 0% and less than or equal to 0.05%

S is an inevitably contained element, and might form a sulfide such as MnS, serve as an origin of cracks, and degrade workability. In view of these, the upper limit of the S content is less than or equal to 0.05%. The S content is preferably as low as possible, is preferably less than or equal to 0.01%, and more preferably less than or equal to 0.008%.

Al: 0.01 to 0.1%

Al serves as a deoxidizer agent. Al is combined with N to form AlN, and size reduction of austenite particles enhances workability and delayed fracture resistance. To effectively obtain such advantages, the lower limit of the Al content is greater than or equal to 0.01%. The lower limit of the Al content is preferably greater than or equal to 0.02%, and more preferably greater than or equal to 0.03%. However, an excessive addition of Al will increase an inclusion such as alumina to degrade workability, and also degrade toughness. In view of these, the upper limit of the Al content is 0.1%. The upper limit of the Al content is preferably less than or equal to 0.08%, and more preferably less than or equal to 0.05%.

N: greater than 0% and less than or equal to 0.01%

N is an inevitably contained element, and an excessively high N content will degrade workability. In the case of adding B (boron) to steel, a BN deposit is generated so that quenching enhancement achieved by B is hindered. Thus, the N content is preferably as low as possible. In view of these, the upper limit of the N content is less than or equal to 0.01%. The upper limit of the N content is preferably less than or equal to 0.008%, and more preferably less than or equal to 0.005%.

The plated steel sheet according to the present invention contains the compositions described above, and the balance consists of an iron and inevitable impurities.

In addition, according to the present invention, the steel sheet may contain the following optional elements:

At least one element selected from the group consisting of Cr: greater than 0% and less than or equal to 1%, Mo: greater than 0% and less than or equal to 1%, and B: greater than 0% and less than or equal to 0.01%.

These elements are effective for strengthening the steel sheet. These elements may be added solely or two or more of these elements may be added in combination.

Specifically, Cr enhances a quenching property, and contributes to strengthening. In addition, Cr suppresses generation and growth of cementite, and contributes to enhancement of bending workability. To effectively obtain such advantages, the lower limit of the Cr content is preferably greater than or equal to 0.01%. However, an excessive addition of Cr will degrade plating properties. In addition, Cr carbide is excessively generated, resulting in degradation of workability. In view of this, the upper limit of the Cr content is less than or equal to 1%. The upper limit of the Cr content is preferably less than or equal to 0.7%, and more preferably less than or equal to 0.4%.

Mo is effective for strengthening, and thus, the lower limit of the Mo content is preferably greater than or equal to 0.01%. However, an excessive addition of Mo will cause saturation of the advantages described above and leads to an increase in cost. Thus, the upper limit of the Mo content is less than or equal to 1%. The Mo content is preferably less than or equal to 0.5%, and more preferably less than or equal to 0.3%.

In a manner similar to Mn, B is an element effective for quenching, suppresses generation of ferrite and bainite, and produces martensite, and contributes to strengthening. To effectively obtain such effects, the lower limit of the B content is preferably 0.0002%. The lower limit of the B content is more preferably greater than or equal to 0.0010%. However, an excessively high B content will degrade hot workability. In view of this, the upper limit of the B content is less than or equal to 0.01%. The B content is preferably less than or equal to 0.0070%, and more preferably less than or equal to 0.0050%.

At least one element selected from the group consisting of Ti: greater than 0% and less than or equal to 0.2%, Nb: greater than 0% and less than or equal to 0.2%, and V: greater than 0% and less than or equal to 0.2%

These elements are effective for enhancing workability and delayed fracture resistance due to size reduction of the structure. These elements may be added solely or two or more of these elements may be added in combination.

To effectively obtain the advantages described above, the lower limit of each of Ti, Nb, and V is preferably greater than or equal to 0.01%. However, excessively high contents of these elements will generate ferrite, and degrade workability. Thus, the upper limit of each element is less than or equal to 0.2%. The content of each of these elements is preferably less than or equal to 0.15%, and more preferably less than or equal to 0.10%.

At least one element selected from the group consisting of Cu: greater than 0% and less than or equal to 1% and Ni: greater than 0% and less than or equal to 1%

Cu and Ni are elements effective for strengthening. These elements may be added solely or two or more of these elements may be added in combination.

To effectively obtain the advantages described above, the lower limit of each of Cu and Ni is preferably greater than or equal to 0.01%. However, excessively high contents of these elements will degrade hot workability. Thus, the upper limit of each of these elements is 1% or less. The content of each of the elements is preferably less than or equal to 0.8%, and more preferably less than or equal to 0.5%.

The steel compositions of the present invention have been described above.

Then, a method for producing a plated steel sheet according to the present invention will be described. The production method of the present invention includes a first process of performing pickling without keeping temperature immediately after hot rolling and coiling and a second process of performing pickling with keeping temperature after hot rolling and coiling. The lower limit of the temperature in hot rolling and coiling differs between the first process (without temperature keeping) and the second process (with temperature keeping) because of the presence of temperature keeping, but the other parts of the processes are the same. This will be specifically described below.

[First Production Process (without Temperature Keeping)]

The first production process according to the present invention is generally classified into a hot rolling step, a pickling and cold rolling step, an oxidation step in a continuous galvanizing line (CGL), a reduction step, and a plating step. The present invention has a feature in including, in this order, a hot rolling step of coiling a steel sheet satisfying the steel compositions described above at 600°C or more to, thereby, obtain a hot-rolled steel sheet including an internal oxide layer, a step of pickling and cold rolling the steel sheet to cause the remaining internal oxide layer to have an average depth d of 4 $\mu$m or more, a step of oxidizing the steel sheet at an air-fuel ratio of 0.9 to 1.4 in an oxidizing zone, and a step of soaking the steel sheet in a range from a point Ac$_3$ to a point Ac$_3$ + 100°C in a reducing zone.

The steps will be described in order.

First, a hot-rolled steel sheet satisfying the steel compositions is prepared. The hot rolling may be performed according to an ordinary method, and the heating temperature is preferably about 1150 to 1300°C to prevent coarsening of austenite particles, for example. The temperature of finish rolling is preferably controlled to about 850 to 950°C.

In the present invention, it is important to control a temperature of coiling after hot rolling to 600°C or more. In this manner, an internal oxide layer can be formed in a surface of the base steel sheet. If the coiling temperature is less than 600°C, the internal oxide layer is not sufficiently formed. In addition, the strength of the hot-rolled steel sheet increases so that cold rollability decreases. The coiling temperature is preferably greater than or equal to 620°C, and more preferably greater than or equal to 640°C. However, an excessively high coiling temperature causes an excessive growth of a mill scale, which cannot be dissolved by pickling. Thus, the upper limit of the coiling temperature is preferably less than or equal to 750°C.

Next, the thus-obtained hot-rolled steel sheet is subjected to pickling and cold rolling in such a manner that the remaining internal oxide layer has an average depth d of 4 $\mu$m or more. It is already known to control the thickness of the internal oxide layer by controlling pickling conditions. Specifically, the temperature and time, for example, of pickling are appropriately controlled to obtain a desired thickness of the internal oxide layer depending on the type and concentration of a pickling solution to be used.

For example, as the pickling solution, mineral acid such as hydrochloric acid, sulfuric acid, and nitric acid may be used.

An internal oxide layer tends to be dissolved and become thin as the concentration and temperature of a pickling solution increase and a pickling time is prolonged. In contrast, as the concentration and temperature of a pickling solution decrease and a pickling time is shortened, a mill scale layer is insufficiently removed by pickling. Thus, in the case of using hydrochloric acid, for example, a concentration is about 3 to 20%, a temperature is 60 to 90°C, and time is about 35 to 200 seconds.

The number of pickling baths is not specifically limited, and a plurality of pickling baths may be used. To the pickling solution, a pickling inhibitor such as amine, i.e., an inhibitor, or a pickling accelerating agent may be added, for example.

After the pickling, cold rolling is performed in such a manner that the remaining internal oxide layer has an average depth d of 4 µm or more. The cold rolling conditions are controlled in such a manner that a cold rolling percentage is in the range from about 20 to 70%.

Then, oxidation and reduction are performed.

Specifically, first, oxidation is performed at an air-fuel ratio of 0.9 to 1.4 in an oxidizing zone. The air-fuel ratio refers to a flow rate ratio between a combustion gas and air. In examples described below, an CO gas is used. The oxidation is performed in an atmosphere in which the air-fuel ratio is in the range so that a Fe oxide film can be formed in a surface and formation of a composite oxide film of Si and Mn, which is harmful to plating properties, can be reduced. In addition, decarburization also occurs so that a desired soft layer is formed and bending workability is enhanced. If the air-fuel ratio is less than 0.9, the Fe oxide film is insufficiently formed. Thus, the formation of the composite oxide film cannot be suppressed so that plating properties are degraded. In addition, decarburization insufficiently occurs and a sufficient soft layer is not formed. Consequently, bending workability is degraded. On the other hand, if the air-fuel ratio is as high as exceeding 1.4, an oxide film is excessively formed, and cannot be sufficiently reduced in a next reduction furnace so that plating properties are hindered. Thus, the air-fuel ratio is preferably controlled to be greater than or equal to 1.0 and less than or equal to 1.2.

In the oxidizing zone described above, it is especially important to control the air-fuel ratio, and other conditions may be obtained by ordinary methods. For example, the lower limit of the oxidation temperature is preferably greater than or equal to 500°C, and more preferably greater than or equal to 750°C. The upper limit of the oxidation temperature is preferably less than or equal to 900°C, and more preferably less than or equal to 850°C.

Thereafter, the oxide film is reduced in a hydrogen atmosphere in a reducing zone. In the present invention, to obtain a desired hard layer by reducing the amount of ferrite, heating is performed in an austenite single-phase range, and soaking is performed in the range from point $Ac_3$ to point $Ac_3$ +100°C. If the soaking temperature is below the point $Ac_3$, ferrite becomes excessive. On the other hand, if the soaking temperature exceeds point $Ac_3$+100°C, austenite becomes coarse, and workability is degraded. The soaking temperature is preferably greater than or equal to point $Ac_3$ + 15°C and less than or equal to point $Ac_3$ + 85°C.

In the present invention, the point $Ac_3$ is calculated based on Equation (i):

$$Ac_3\ (°C) = 910 - 203 \times [C]^{1/2} - 15.2 \times [Ni] + 44.7 \times [Si] + 104 \times [V] + 31.5 \times [Mo] + 13.1 \times [W] - \{30 \times [Mn] + 11 \times [Cr] + 20 \times [Cu] - 700 \times [P] - 400 \times [Al] - 120 \times [As] - 400 \times [Ti]\} \quad (i)$$

where [ ] represents a content (mass %) of each element. This equation is described in "The Physical Metallurgy of Steels" (William C. Leslie, MARUZEN Co. Ltd., p. 273).

In the reduction furnace, it is important to control especially the soaking temperature, and other conditions may be obtained by ordinary methods. For example, the atmosphere of the reducing zone is preferably controlled to contain hydrogen and nitrogen, and have a hydrogen concentration ranging from about 5 to 25 volume %. Herein, a dew point is controlled to -30 to -60°C.

The retention time of soaking is not specifically limited, and is preferably controlled to about 10 to 100 seconds, and more preferably about 10 to 80 seconds.

Then, cooling is performed. An average cooling speed in this cooling is preferably controlled to 5°C/sec or more to suppress generation of ferrite. The average cooling speed is more preferably 8°C/sec or more. The upper limit of the average cooling speed is not specifically limited, and is preferably controlled to about 100°C/sec in consideration of controllability of the base steel sheet temperature and facility cost. The average cooling speed is preferably 50°C/sec or less, and more preferably 30°C/sec or less.

The cooling stop temperature only needs to be in a range where no ferrite is generated, and cooling is preferably performed to 550°C or less, for example. The lower limit of the cooling stop temperature is preferably greater than or equal to 450°C, more preferably greater than or equal to 460°C, and much more preferably greater than or equal to 470°C.

The cooling method is not limited to that described above. For example, in the case of heating to a plating bath temperature in hot-dip galvanizing after cooling, cooling may be performed to temperatures below the preferred ranges of the cooling stop temperature described above. See, for example, No. 11 of Table 1 below. Alternatively, after cooling to a predetermined temperature, water cooling may be performed. See No. 12 in Table 1 below.

Subsequently, in accordance with an ordinary method, hot-dip galvanizing is performed. The method of hot-dip galvanizing is not specifically limited, and the lower limit of the plating bath temperature is preferably greater than or equal to 400°C, and more preferably greater than or equal to 440°C. The upper limit of the plating bath temperature is preferably less than or equal to 500°C, and more preferably less than or equal to 470°C. A composition of the plating bath is not specifically limited, and a known hot-dip galvanizing bath may be used. Cooling conditions after hot-dip galvanizing are not specifically limited. For example, an average cooling speed to an ordinary temperature is preferably controlled to greater than or equal to about 1°C/sec, and more preferably greater than or equal to 5°C/sec. The upper limit of the average cooling speed is not specifically limited, but is preferably controlled to be less than or equal to about 50°C/sec in consideration of controllability of the base steel sheet temperature and facility cost. The average cooling speed is preferably less than or equal to 40°C/sec, and more preferably 30°C/sec.

In addition, alloying treatment may be performed by an ordinary method when necessary so that an alloyed hot-dip galvanized steel sheet is obtained. Conditions for the alloying treatment are not specifically limited. For example, after hot-dip galvanizing has been performed in the conditions described above, the alloying treatment is preferably performed by retaining the steel sheet at about 500 to 600°C, especially about 530 to 580°C for about 5 to 30 seconds, especially about 10 to 25 seconds. Below the range, alloying is insufficient, whereas above the range, alloying excessively proceeds so that the plated layer might be peeled off. In addition, ferrite is easily generated. The alloying treatment only needs to be performed with, for example, a heating furnace, direct flame, or an infrared ray heating furnace. A heating means is not specifically limited, and typical means such as gas heating, heating with an induction heater, i.e., heating with a high frequency induction heater, may be employed.

After the alloying treatment, cooling is performed according to an ordinary method, thereby obtaining an alloyed hot-dip galvanized steel sheet. The average cooling speed to an ordinary temperature is controlled to about 1°C/sec or more.

[Second Production Process (with Temperature Keeping)]

The second production process according to the present invention includes, in this order, a hot rolling step of coiling a hot-rolled steel sheet satisfying the steel compositions described above at 500°C or more, a step of keeping the temperature of the steel sheet at 500°C or more for 80 minutes or longer, a step of pickling and cold rolling the steel sheet to cause the remaining internal oxide layer to have an average depth d of 4 $\mu$m or more, a step of oxidizing the steel sheet at an air-fuel ratio of 0.9 to 1.4 in an oxidizing zone, and a step of soaking the steel sheet in a range from point $Ac_3$ to point $Ac_3$+100°C in a reducing zone. As compared to the first production process described above, the second production process is different from the first production process in two aspects in which: the lower limit of the coiling temperature after hot rolling is 500°C or more; and the temperature keeping step is performed after the hot rolling step. These two aspects will be described below. The steps already described in the first production process shall be understood with reference to the first production process.

The temperature keeping step is performed as described above for the purpose of enabling a long-time retention of the steel sheet in a temperature range where oxidation can be performed with the temperature keeping so that the lower limit of the coiling temperature range where a desired internal oxide layer can be obtained can be lowered. In addition, it is possible to enhance uniformity of the base steel sheet by reducing the temperature difference between the surface layer of the base steel sheet and an inner portion thereof.

In the second production process, first, the coiling temperature after hot rolling is controlled to 500°C or more. As described later, in the second production process, since the temperature keeping step is provided after the step of controlling the coiling temperature, the coiling temperature can be set at temperatures below 600°C, which is the lower limit of the coiling temperature in the first production process described above. The coiling temperature is preferably greater than or equal to 540°C, and more preferably greater than or equal to 570°C. A preferred upper limit of the coiling temperature is the same as that in the first production process, and is preferably less than or equal to 750°C.

The thus-obtained hot-rolled steel sheet is then kept at 500°C or more for 80 minutes or longer. In this manner, a desired internal oxide layer can be obtained. To effectively obtain the advantages described above by utilizing temperature keeping, the temperature of the hot-rolled steel sheet is preferably kept by placing the hot-rolled steel sheet in a thermally insulating device, for example. This device used in the present invention is not specifically limited as long as the device is made of a thermally insulating material, which is preferably ceramic fibers, for example.

To effectively obtain the advantages described above, the temperature needs to be kept at 500°C or more for 80 minutes or longer. The temperature is preferably greater than or equal to 540°C, and more preferably greater than or equal to 560°C. The time for temperature keeping is preferably greater than or equal to 100 minutes, and more preferably greater than or equal to 120 minutes. In consideration of pickling ability and productivity, for example, the upper limits of the temperature and time are preferably controlled to about 700°C or less and 500 minutes or less, respectively.

The first and second production processes according to the present invention have been described above.

The plated steel sheet obtained by the production method according to the present invention may be additionally subjected to various coatings and a prime coating treatment, e.g., a chemical conversion treatment such as a phosphate treatment and an organic coating treatment such as formation of an organic coating of, for example, a film laminate.

Examples of paint used for the coatings include known resins such as an epoxy resin, a fluorocarbon resin, a silicon acrylic resin, a polyurethane resin, an acrylic resin, a polyester resin, a phenol resin, an alkyd resin, and a melamine resin. In view of corrosion resistance, the epoxy resin, the fluorocarbon resin, and the silicon acrylic resin are preferable. In addition to the resin, a curing agent may be used. The paint may include a known additive, such as coloring pigment, a coupling agent, a levelling agent, an intensifier, an oxidation inhibitor, an ultraviolet ray stabilizer, or a fire retardant, for example.

In the present invention, the paint form is not specifically limited, and the paint may be in various forms, such as solvent-based paint, water-based paint, water-dispersed paint, powdery paint, and electrodeposition paint. The method for coating is not specifically limited, and may be dipping, roll coater, spraying, curtain flow coater, or electrodeposition coating, for example. The thicknesses of the coating layers such as the plated layer, the organic coating, the chemical conversion treatment coating film, and the paint film are appropriately adjusted in accordance with application.

The high-strength plated steel sheet according to the present invention has an ultra-high strength and is excellent in workability (bending workability and hole expandability) and delayed fracture resistance, and thus, is applicable to automobile reinforcing parts, e.g., automobile construction members including side members of front and rear parts, colliding parts such as crush boxes, pillars such as center pillar reinforces, roof rail reinforces, side sills, floor members, and kick parts.

Although the present invention will be more specifically described by way of examples hereinafter, the present invention is not limited to the examples.

Examples

A slab having a composition shown in Table 1 below with a balance of iron and inevitable impurities was heated to 1250°C, subjected to hot rolling at a finish rolling temperature of 900°C to 2.4 mm, and then wound at a temperature shown in Table 2.

For some examples Nos. 26 to 28, the slab was placed in a thermal insulating device of ceramic fibers, and the temperature was kept under conditions shown in Table 2. The time in which the temperature was kept at 500°C or more was measured with a thermocouple attached to an outer circumferential portion of a coil.

Then, the thus-obtained hot-rolled steel sheet was pickled under conditions described below, and then cold rolled at a cold rolling percentage of 50%. The thickness after the cold rolling was 1.2 mm.
Pickling solution: 10% hydrochloric acid, Temperature: 82°C
Pickling time: shown in Table 2.

Thereafter, in a continuous galvanizing line, annealing (oxidation and reduction) and cooling were performed under conditions shown in Table 2. Here, the temperature of an oxidation furnace placed in the continuous galvanizing line was controlled to 800°C, the hydrogen concentration in a reduction furnace was controlled to 20 volume %, the balance was nitrogen and inevitable impurities, and the dew point was controlled to - 45°C. All the retention times at soaking temperatures shown in Table 2 were 50 seconds.

Subsequently, except for Nos. 10 and 11, the steel sheet was immersed in a galvanization bath at 460°C for about 50 seconds, and then cooled to room temperature at an average cooling speed of 10°C/sec, thereby obtaining a hot-dip galvanized steel sheet (GI) (No. 23). An alloyed hot-dip galvanized steel sheet (GA) was immersed in the galvanization bath to be subjected to hot-dip galvanizing, heated to 500°C and retained at 500°C for 20 seconds, subjected to alloying, and then cooled to room temperature at an average cooling speed of 10°C/sec (see Nos. 1 to 9, 12 to 22, 24, and 25 to 28).

In No. 10, the steel sheet was cooled to a cooling stop temperature of 200°C shown in Table 2, heated to 460°C, and then immersed in a galvanization bath, thereby obtaining a GA steel sheet in a manner similar to those described above. In No. 11, as shown in Table 2, the steel sheet was cooled to 600°C at an average cooling speed of 10°C/sec, subjected to water quenching (WQ), then heated to 460°C, and immersed in a galvanization bath, thereby obtaining a GA steel sheet in a manner similar to those described above.

Properties of the thus-obtained plated steel sheets, i.e., GI and GA, were evaluated. As described later, an average depth of an internal oxide layer was measured not only for a plated steel sheet but also for a base steel sheet after pickling and cold rolling for reference. This is for the purpose of confirming that a desired average depth of an internal oxide layer has been already obtained by controlling a coiling temperature and pickling conditions after hot rolling in a cold-rolled steel sheet before annealing.

(1) Measurement of Average Depth d of Internal Oxide layer in Plated Steel Sheet

A test piece having a size of 50 mm × 50 mm (where W is a sheet width of a plated steel sheet) was taken from a W/4 portion, and an O content, a Fe content, and a ZN content in a surface of a plated layer were analyzed and quantified with glow discharge-optical emission spectroscopy (GD-OES). Specifically, with a GD-OES system, GD-PROFILER2 series GDA750 produced by HORIBA, Ltd., high frequency spattering was performed on a surface of the test piece within an Ar glow discharge range, and emission lines of each of O, Fe, and Zn elements in Ar plasma to be spattered were continuously dispersed for spectroscopy, thereby analyzing a profile of each element content in a depth direction of a base steel sheet. Spattering was performed in the following conditions. A measurement region was from the surface of the plated layer to a depth of 50 $\mu$m.

(Spattering Conditions)

Pulse spattering frequency: 50 Hz
Anode diameter (area for analysis): diameter of 6 mm
Discharge power: 30 W
Ar gas pressure: 2.5 hPa
FIG. 2 shows results of the analysis. As shown in FIG. 2, a depth from the surface of the plated layer 1 at which the ZN content and the Fe content are equal to each other was defined as an interface between the plated layer 1 and the base steel sheet 2. An average value of the O content at each measurement location at a depth of 40 to 50 $\mu$m from the surface of the plated layer was defined as an average value of the O content in bulk. A range higher than the average value of the O content by 0.02%, i.e., O content $\geq$ (an average value of O content in bulk + 0.02%), was defined as an internal oxide layer. A maximum depth of the internal oxide layer was defined as a depth of the internal oxide layer. Similar tests were performed using three test pieces, and an average of these test pieces was defined as an average depth d of an internal oxide layer.

(2) Measurement of Depth of Internal Oxide layer after Pickling and Cold Rolling (for Reference)

Steps similar to those in above-mentioned (1) except that a base steel sheet after pickling and cold rolling was used were performed, and an average depth of an internal oxide layer was calculated.

(3) Measurement of Average Depth D of Soft Layer

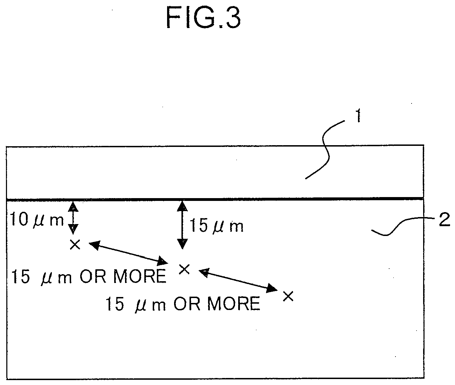

A W/4 portion, which is a section perpendicular to a direction of a sheet width W of the plated steel sheet, was exposed, and a test piece having a size of 20 mm $\times$ 20 mm was taken, and buried in a resin. Then, a Vickers hardness was measured from the interface between the plated layer and the base steel sheet toward the inside along a thickness t of the base steel sheet. The measurement was performed with a Vickers hardness meter under a load of 3 gf. Specifically, as shown in FIG. 3, measurement was performed at a pitch of 5 $\mu$m from a measurement location at a thickness internal depth of 10 $\mu$m from the interface between the plated layer and the base material toward an inner portion along the thickness to measure a Vickers hardness to a depth of 100 $\mu$m. A distance between measurement points, i.e., the distance between x and x in FIG. 3 was 15 $\mu$m at least. A Vickers hardness was measured at each depth by n = 1, thereby investigating a hardness distribution in the inward direction along the thickness. Similarly, a Vickers hardness in a t/4 portion of the base steel sheet was measured. As compared to the t/4 portion, a region having a Vickers hardness of 90% or less was defined as a soft layer, and a depth of the soft layer was calculated. Similar processes were performed at three locations in the same test piece, and an average thereof was defined as an average depth D of the soft layer.

(4) Method for Measuring Fractions of Structure of Plated Steel Sheet

A W/4 portion, which is a section perpendicular to a direction of a sheet width W of the plated steel sheet, was exposed, and this section was polished, then electro-polished, and etched. The resulting portion was observed with a scanning electron microscope (SEM). The observation was performed at a t/4 location (where t is a thickness of the base steel sheet) with a magnification of 2000 in a region of 40 $\mu$m $\times$ 40 $\mu$m. A metal structure photograph taken with the SEM was subjected to an image analysis, thereby measuring an area ratio of martensite and bainite (not distinguished from each other) and an area ratio of ferrite. In Table 3, $\alpha$ refers to ferrite, and (B+M) refers to (bainite + martensite). In Table 3, area fractions of a structure shown in "Other" were calculated by subtracting area ratios of martensite and bainite, and ferrite from 100 area %. The observation was performed on optional three visual fields, and an average value thereof was calculated.

(5) Method for Measuring in Tensile Test

A JIS #13 B tensile test piece was taken in such a manner that a longitudinal direction of the test piece is in parallel with a direction perpendicular to a rolling direction of the plated steel sheet, and a tensile strength (TS) and a yield stress (YS) in a direction C were measured according to JIS Z2241. From TS and YS, a yield ratio YR (YS/TS) was calculated.

In this example, tensile strengths TS greater than or equal to 980 MPa were defined as high strength (acceptable). In addition, a test piece having a yield stress YR of 60% or more was evaluated as a test piece excellent in shock absorption (acceptable).

(6) Bending Process Test

A test piece of 20 mm × 70 mm was cut out from the plated steel sheet in such a manner that a direction perpendicular to a rolling direction of the plated steel sheet was in parallel with a longitudinal direction of the test piece, and a 90° V-bending test was performed with a bending ridge being oriented in the longitudinal direction. The test was conducted with a bend radius R being appropriately varied, thereby obtaining a minimum bending radius Rmin with which a bending process can be performed without occurrence of cracks in the test piece.

Based on Rmin/t obtained by dividing Rmin by a thickness t of the base steel sheet, bending workability was evaluated for each tensile strength TS. This will be specifically described below. The bending workability was not evaluated for pieces whose TS did not satisfy a tensile strength of 980 MPa or more, which is an acceptable standard (represented as "-"in Table 3).

In a case where TS is greater than or equal to 980 MPa and less than 1080 MPa, Rmin/t < 1.0 is acceptable.

In a case where TS is greater than or equal to 1080 MPa and less than 1180 MPa, Rmin/t < 1.5 is acceptable.

In a case where TS is greater than or equal to 1180 MPa, Rmin/t < 2.50 is acceptable.

(7) Delayed Fracture Resistance Test

A W/4 portion, which is a section perpendicular to a direction of a sheet width W of the plated steel sheet, was exposed, and a test piece of 150 mm (W) × 30 mm (L) was cut out, and a U-bending process was performed thereon by using a minimum bending radius. Then, the test piece was fastened with a bolt, and a tensile stress of 1000 MPa was applied to an outer surface of a U-bending test piece. The tensile stress was measured by bonding a distortion gauge to an outer surface of the U-bending test piece and converted distortion to tensile stress. Thereafter, an edge portion of the U-bending test piece was masked, and electrochemically charged with hydrogen. The hydrogen charging was performed under conditions that the test piece was immersed in a mixed solution of $0.1M\text{-}H_2SO_4$ (pH = 3) and $0.01M\text{-}KSCN$ at room temperature with a constant current of 100 $\mu A/mm^2$.

From results of the hydrogen charging test, it was evaluated that a test piece showing no occurrence of cracks for 24 hours was acceptable, i.e., was excellent in delayed fracture resistance.

(8) Hole Expansion Test

According to Japan Iron and Steel Federation Standard JFST 1001, a hole expansion test was conducted, and λ was measured. Specifically, a hole having a diameter of 10 mm was punched in the plated steel sheet, and a 60° conical punch was inserted into the hole with the vicinity thereof being constrained. In this state, a diameter of the hole at a limit of crack occurrence was measured. From an equation below, a critical hole expansion ratio λ (%) was obtained. If λ is 25% or more, the test piece was evaluated to be acceptable, i.e., excellent in hole expandability.

$$\text{critical hole expansion ratio } \lambda\ (\%) = \{(Df - D0)/D0\} \times 100$$

where Df is a diameter (mm) of a hole at a limit of occurrence of cracks, and D0 is a diameter (mm) of an initial hole.

(9) Plating Appearance

An appearance of the plated steel sheet was visually observed. If unplating was not observed, the test piece was evaluated to be acceptable, i.e., excellent in plating properties.

These results are shown in Table 2 and Table 3.

[Table 1]

| No. | Steel type | Component (mass %) | | | | | | | | | | | | | | | Ac$_3$ (°C) |
|-----|-----------|------|------|------|-------|---|-------|--------|------|-----|--------|------|------|-----|------|------|------|
| | | C | Si | Mn | P | S | Al | N | Cr | Mo | B | Ti | Nb | V | Cu | Ni | |
| 1 | A | 0.13 | 0.82 | 2.45 | 0.011 | 0 | 0.041 | 0.0039 | | | | | | | | | 824 |
| 2 | B | 0.11 | 1.21 | 2.45 | 0.010 | 0 | 0.037 | 0.0038 | 0.30 | | | | | | | | 842 |
| 3 | C | 0.10 | 1.07 | 2.75 | 0.009 | 0 | 0.045 | 0.0035 | | 0.2 | | | | | | | 842 |
| 4 | D | 0.14 | 1.70 | 2.20 | 0.011 | 0 | 0.041 | 0.0037 | | | 0.0030 | | | | | | 868 |
| 5 | E | 0.08 | 1.24 | 2.20 | 0.010 | 0 | 0.038 | 0.0037 | | | | 0.07 | | | | | 892 |
| 6 | F | 0.17 | 1.53 | 2.10 | 0.012 | 0 | 0.036 | 0.0038 | | | | | 0.10 | | | | 854 |
| 7 | G | 0.12 | 1.82 | 2.50 | 0.008 | 0 | 0.038 | 0.0035 | | | | | | 0.1 | | | 876 |
| 8 | H | 0.18 | 1.26 | 2.56 | 0.009 | 0 | 0.031 | 0.0031 | | | | | | | 0.15 | | 819 |
| 9 | I | 0.12 | 1.35 | 2.08 | 0.014 | 0 | 0.036 | 0.0038 | | | | | | | | 0.15 | 860 |
| 10 | J | 0.24 | 1.40 | 2.40 | 0.090 | 0 | 0.042 | 0.0051 | | | 0.0030 | | | | | | 881 |
| 11 | K | 0.17 | 1.35 | 2.05 | 0.011 | 0 | 0.044 | 0.0042 | | | 0.0030 | 0.02 | | | | | 858 |
| 12 | L | 0.26 | 1.10 | 2.10 | 0.011 | 0 | 0.042 | 0.0032 | | | | | | | | | 817 |
| 13 | M | 0.11 | 0.40 | 2.35 | 0.011 | 0 | 0.042 | 0.0032 | | | | | | | | | 815 |
| 14 | N | 0.10 | 1.80 | 1.80 | 0.015 | 0 | 0.041 | 0.0051 | 0.20 | | | 0.04 | | | | | 913 |
| 15 | P | 0.15 | 1.00 | 2.00 | 0.011 | 0 | 0.043 | 0.0036 | | | | | | | | | 841 |
| 16 | A | 0.13 | 0.82 | 2.45 | 0.011 | 0 | 0.041 | 0.0039 | | | | | | | | | 824 |
| 17 | A | 0.13 | 0.82 | 2.45 | 0.011 | 0 | 0.041 | 0.0039 | | | | | | | | | 824 |
| 18 | A | 0.13 | 0.82 | 2.45 | 0.011 | 0 | 0.041 | 0.0039 | | | | | | | | | 824 |
| 19 | A | 0.13 | 0.82 | 2.45 | 0.011 | 0 | 0.041 | 0.0039 | | | | | | | | | 824 |
| 20 | A | 0.13 | 0.82 | 2.45 | 0.011 | 0 | 0.041 | 0.0039 | | | | | | | | | 824 |
| 21 | A | 0.13 | 0.82 | 2.45 | 0.011 | 0 | 0.041 | 0.0039 | | | | | | | | | 824 |
| 22 | A | 0.13 | 0.82 | 2.45 | 0.011 | 0 | 0.041 | 0.0039 | | | | | | | | | 824 |
| 23 | A | 0.13 | 0.82 | 2.45 | 0.011 | 0 | 0.041 | 0.0039 | | | | | | | | | 824 |
| 24 | A | 0.13 | 0.82 | 2.45 | 0.011 | 0 | 0.041 | 0.0039 | | | | | | | | | 824 |

(continued)

| No. | Steel type | Component (mass %) | | | | | | | | | | | | | | | Ac$_3$ (°C) |
|---|---|---|---|---|---|---|---|---|---|---|---|---|---|---|---|---|---|
| | | C | Si | Mn | P | S | Al | N | Cr | Mo | B | Ti | Nb | V | Cu | Ni | |
| 25 | A | 0.13 | 0.82 | 2.45 | 0.011 | 0 | 0.041 | 0.0039 | | | | | | | | | 824 |
| 26 | A | 0.13 | 0.82 | 2.45 | 0.011 | 0 | 0.041 | 0.0039 | | | | | | | | | 824 |
| 27 | A | 0.13 | 0.82 | 2.45 | 0.011 | 0 | 0.041 | 0.0039 | | | | | | | | | 824 |
| 28 | A | 0.13 | 0.82 | 2.45 | 0.011 | 0 | 0.041 | 0.0039 | | | | | | | | | 824 |

[Table 2]

| No. | Steel Type | Coiling Temperature after Hot Rolling | Temperature Keeping | Temperature Keeping Time at 500°C or more (min.) | Pickling Time (sec.) | Average depth (μm) of Internal Oxide Layer Pickling and Cold Rolling | Oxidation Furnace Air-fuel Ratio | Soaking Temperature (°C) | Average Cooling Speed (°C/sec.) | Cooling Stop Temperature (°C) | Average Depth (μm) of Internal Oxide Layer Plating | Depth (μm) of Soft Layer Plating | D/2d |
|---|---|---|---|---|---|---|---|---|---|---|---|---|---|
| 1 | A | 660 | Not Performed | - | 45 | 10 | 1.1 | 900 | 10 | 450 | 11 | 24 | 1.09 |
| 2 | B | 660 | Not Performed | - | 45 | 12 | 1.1 | 900 | 10 | 450 | 12 | 26 | 1.08 |
| 3 | C | 660 | Not Performed | - | 45 | 11 | 1.1 | 900 | 10 | 450 | 11 | 22 | 1.00 |
| 4 | D | 660 | Not Performed | - | 45 | 13 | 1.1 | 900 | 10 | 450 | 13 | 30 | 1.15 |
| 5 | E | 660 | Not Performed | - | 45 | 11 | 1.1 | 900 | 10 | 450 | 12 | 32 | 1.33 |
| 6 | F | 660 | Not Performed | - | 45 | 9 | 1.1 | 900 | 10 | 450 | 11 | 28 | 1.27 |
| 7 | G | 660 | Not Performed | - | 45 | 12 | 1.1 | 900 | 10 | 450 | 12 | 28 | 1.17 |
| 8 | H | 660 | Not Performed | - | 45 | 11 | 1.1 | 900 | 10 | 450 | 11 | 26 | 1.18 |
| 9 | I | 660 | Not Performed | - | 45 | 13 | 1.1 | 900 | 10 | 450 | 14 | 24 | 0.86 |
| 10 | J | 660 | Not Performed | - | 45 | 12 | 1.1 | 900 | 10 | 200 | 13 | 30 | 1.15 |
| 11 | K | 660 | Not Performed | - | 45 | 11 | 1.1 | 900 | 10(*) | WQ | 11 | 24 | 1.09 |
| 12 | L | 660 | Not Performed | - | 45 | 13 | 1.1 | 900 | 10 | 450 | 14 | 36 | 1.29 |
| 13 | M | 660 | Not Performed | - | 45 | 2 | 1.1 | 900 | 10 | 450 | 3 | 20 | 3.33 |
| 14 | N | 660 | Not Performed | - | 45 | 13 | 1.1 | 925 | 10 | 450 | 14 | 34 | 1.21 |
| 15 | P | 660 | Not Performed | - | 45 | 10 | 1.1 | 900 | 4 | 450 | 11 | 26 | 1.18 |
| 16 | A | 580 | Not Performed | - | 45 | 2 | 1.1 | 900 | 10 | 450 | 3 | 17 | 2.83 |
| 17 | A | 590 | Not Performed | - | 45 | 3 | 1.1 | 900 | 10 | 450 | 3 | 18 | 3.00 |
| 18 | A | 720 | Not Performed | - | 45 | 15 | 1.1 | 900 | 10 | 450 | 16 | 40 | 1.25 |
| 19 | A | 660 | Not Performed | - | 45 | 10 | 0.8 | 900 | 10 | 450 | 10 | 12 | 0.60 |
| 20 | A | 660 | Not Performed | - | 45 | 10 | 0.9 | 900 | 10 | 450 | 11 | 20 | 0.91 |

(continued)

| No. | Steel Type | Coiling Temperature after Hot Rolling | Temperature Keeping | Temperature Keeping Time at 500°C or more (min.) | Pickling Time (sec.) | Average depth (μm) of Internal Oxide Layer Pickling and Cold Rolling | Oxidation Furnace Air-fuel Ratio | Soaking Temperature (°C) | Average Cooling Speed (°C/sec.) | Cooling Stop Temperature (°C) | Average Depth (μm) of Internal Oxide Layer Plating | Depth (μm) of Soft Layer Plating | D/2d |
|---|---|---|---|---|---|---|---|---|---|---|---|---|---|
| 21 | A | 660 | Not Performed | - | 45 | 10 | 1.1 | 800 | 10 | 450 | 11 | 24 | 1.09 |
| 22 | A | 660 | Not Performed | - | 45 | 10 | 1.1 | 900 | 2 | 450 | 11 | 25 | 1.14 |
| 23 | A | 660 | Not Performed | - | 45 | 10 | 1.1 | 900 | 10 | 450 | 11 | 24 | 1.09 |
| 24 | A | 660 | Not Performed | - | 250 | 0 | 1.1 | 900 | 10 | 450 | 2 | 13 | 3.25 |
| 25 | A | 620 | Not Performed | - | 45 | 7 | 1.1 | 900 | 10 | 450 | 8 | 22 | 1.38 |
| 26 | A | 470 | Performed | 180 | 45 | 1 | 1.1 | 900 | 10 | 450 | 1 | 16 | 8.00 |
| 27 | A | 570 | Performed | 180 | 45 | 12 | 1.1 | 900 | 10 | 450 | 13 | 32 | 1.23 |
| 28 | A | 570 | Performed | 60 | 45 | 3 | 1.1 | 900 | 10 | 450 | 3 | 18 | 3.00 |

(*) Water quenching after cooling to 600°C at 10°C/sec.

[Table 3]

| No. | Steel Type | Structure (area %) of Hard Layer | | | YS (MPa) | TS (MPa) | YR (%) | λ (%) | Bending Workability | | Delayed Fracture Resistance | Plating Properties | Plating Type |
|---|---|---|---|---|---|---|---|---|---|---|---|---|---|
| | | α | B+M | Others | | | | | Rmin/t | Evaluation | | | |
| 1 | A | 0 | 99 | 1 | 834 | 1201 | 69 | 36 | 1.67 | acceptable | acceptable | acceptable | GA |
| 2 | B | 0 | 100 | 0 | 910 | 1284 | 71 | 42 | 1.67 | acceptable | acceptable | acceptable | GA |
| 3 | C | 0 | 99 | 1 | 830 | 1210 | 69 | 54 | 1.25 | acceptable | acceptable | acceptable | GA |
| 4 | D | 0 | 98 | 2 | 871 | 1282 | 68 | 32 | 2.08 | acceptable | acceptable | acceptable | GA |
| 5 | E | 4 | 93 | 3 | 632 | 981 | 64 | 29 | 0.42 | acceptable | acceptable | acceptable | GA |
| 6 | F | 0 | 99 | 1 | 960 | 1321 | 73 | 31 | 2.08 | acceptable | acceptable | acceptable | GA |
| 7 | G | 0 | 99 | 1 | 867 | 1312 | 66 | 39 | 1.67 | acceptable | acceptable | acceptable | GA |
| 8 | H | 0 | 100 | 0 | 1032 | 1472 | 70 | 36 | 2.08 | acceptable | acceptable | acceptable | GA |
| 9 | I | 3 | 95 | 2 | 735 | 1087 | 68 | 36 | 1.25 | acceptable | acceptable | acceptable | GA |
| 10 | J | 0 | 96 | 4 | 1026 | 1245 | 82 | 43 | 1.25 | acceptable | acceptable | acceptable | GA |
| 11 | K | 0 | 100 | 0 | 855 | 1032 | 83 | 65 | 0.42 | acceptable | acceptable | acceptable | GA |
| 12 | L | 0 | 94 | 6 | 1105 | 1632 | 68 | 22 | 3.33 | unacceptable | unacceptable | acceptable | GA |
| 13 | M | 0 | 100 | 0 | 646 | 1012 | 64 | 24 | 2.50 | unacceptable | unacceptable | acceptable | GA |
| 14 | N | 35 | 62 | 3 | 557 | 963 | 58 | 23 | 0.83 | - | acceptable | acceptable | GA |
| 15 | P | 42 | 58 | 0 | 537 | 935 | 57 | 18 | 0.83 | - | acceptable | acceptable | GA |
| 16 | A | 0 | 99 | 1 | 840 | 1206 | 70 | 26 | 2.50 | unacceptable | unacceptable | unacceptable | GA |
| 17 | A | 0 | 99 | 1 | 839 | 1205 | 70 | 27 | 2.50 | unacceptable | unacceptable | unacceptable | GA |
| 18 | A | 0 | 99 | 1 | 829 | 1189 | 70 | 34 | 1.25 | acceptable | acceptable | acceptable | GA |
| 19 | A | 0 | 99 | 1 | 840 | 1208 | 70 | 34 | 2.50 | unacceptable | unacceptable | unacceptable | GA |
| 20 | A | 0 | 99 | 1 | 841 | 1204 | 70 | 30 | 2.29 | acceptable | acceptable | acceptable | GA |
| 21 | A | 20 | 77 | 3 | 655 | 1130 | 58 | 14 | 2.92 | unacceptable | unacceptable | acceptable | GA |
| 22 | A | 15 | 83 | 2 | 674 | 1145 | 59 | 18 | 2.92 | unacceptable | unacceptable | acceptable | GA |
| 23 | A | 0 | 99 | 1 | 830 | 1199 | 69 | 37 | 1.67 | acceptable | acceptable | acceptable | GI |
| 24 | A | 0 | 99 | 1 | 845 | 1211 | 70 | 26 | 2.92 | unacceptable | unacceptable | unacceptable | GA |

| No. | Steel Type | Structure (area %) of Hard Layer | | | YS | TS | YR | λ | Bending Workability | | Delayed Fracture Resistance | Plating Properties | Plating Type |
|---|---|---|---|---|---|---|---|---|---|---|---|---|---|
| | | α | B+M | Others | (MPa) | (MPa) | (%) | (%) | Rmin/t | Evaluation | | | |
| 25 | A | 0 | 99 | 1 | 840 | 1209 | 69 | 38 | 1.67 | acceptable | acceptable | acceptable | GA |
| 26 | A | 0 | 100 | 0 | 832 | 1220 | 68 | 27 | 2.50 | unacceptable | unacceptable | unacceptable | GA |
| 27 | A | 0 | 99 | 1 | 813 | 1195 | 68 | 30 | 1.25 | acceptable | acceptable | acceptable | GA |
| 28 | A | 0 | 99 | 1 | 830 | 1219 | 68 | 28 | 2.50 | unacceptable | unacceptable | unacceptable | GA |

As shown in the tables, the following consideration was obtained.

First, Nos. 1 to 8, 10, 11, 18, 23, 25, and 27 are examples satisfying requirements of the present invention, and excellent in all the aspects of strength, workability (bending workability and hole expandability ($\lambda$)), delayed fracture resistance, shock properties, and plating properties. In particular, in No. 1 (D / 2d = 1.09) in which the average depth d of the internal oxide layer and the average depth D of the soft layer satisfy a relationship of D > 2d (i.e., the value of "D / 2d"in Table 2 exceeds 1), bending workability was enhanced as compared to No. 20 (D / 2d = 0.91) not satisfying the relationship. In addition, $\lambda$ increased.

On the other hand, in No. 12, the C content was high, and bending workability, $\lambda$, and delayed fracture resistance were degraded.

No. 13 is an example in which the Si content was low, the internal oxide layer was insufficiently formed, and bending workability, $\lambda$, and delayed fracture resistance were degraded.

No. 14 is an example in which the Mn content was low and a quenching property was poor so that ferrite was excessively generated and the total amount of (B+M) was small. Consequently, TS and YR decreased, and $\lambda$ also decreased.

No. 15 is an example in which an average cooling speed after soaking was slow, and ferrite was excessively generated during cooling so that the total amount of (B+M) was small and a desired hard layer was not obtained. Consequently, TS and YR decreased, and $\lambda$ decreased.

No. 22 was an example in which the average cooling speed after soaking was low, ferrite was excessively generated during cooling so that YR decreased, and $\lambda$, bending workability, and delayed fracture resistance were degraded.

Nos. 16 and 17 were examples in each of which a coiling temperature in hot rolling was low, and an average depth of the internal oxide layer after pickling and cold rolling was small so that the average depth d of the internal oxide layer after plating and the average depth D of the soft layer were small. Consequently, bending workability, delayed fracture resistance, and plating properties were degraded.

In No. 19, the air-fuel ratio in an oxidation furnace was low, and an iron oxide film was insufficiently formed so that plating properties were degraded. The soft layer was also insufficiently formed, and bending workability and delayed fracture resistance were degraded.

No. 21 is an example in which the soaking temperature was low, two-phase range annealing was performed, ferrite was excessively generated, the total amount of (B+M) was small, and a desired hard layer was not obtained. Thus, YR decreased, and $\lambda$, bending workability, and delayed fracture resistance were degraded.

No. 24 is an example in which the pickling time was long, the internal oxide layer was dissolved, and a desired average depth d of the internal oxide layer and a desired average depth D of the soft layer were not obtained, that is, the internal oxide layer and the soft layer were thin. Consequently, bending workability, delayed fracture resistance, and plating properties were degraded.

No. 26 is an example in which the coiling temperature in hot rolling was low, and the average depth of the internal oxide layer after pickling and cold rolling was small so that the average depth d of the internal oxide layer after plating and the average depth D of the soft layer were also small. Consequently, bending workability, delayed fracture resistance, and plating properties were degraded.

No. 28 is an example in which the temperature keeping time was insufficient and the average depth of the internal oxide layer after pickling and cold rolling was small so that the average depth d of the internal oxide layer after plating and the average depth D of the soft layer were also small. Consequently, bending workability, delayed fracture resistance, and plating properties were degraded.

**Reference Sign List**

1 plated layer
2 base steel sheet
3 internal oxide layer
4 soft layer
5 hard layer
6 inner portion

**Claims**

**1.** A high-strength plated steel sheet having a hot-dip galvanized layer (1) or an alloyed hot-dip galvanized layer (1) on a surface of a base steel sheet (2), wherein

(i) the base steel sheet (2) contains, by mass %,

C: 0.05 to 0.25%,
Si: 0.5 to 2.5%,
Mn: 2.0 to 4%,
P: greater than 0% and less than or equal to 0.1 %,
S: greater than 0% and less than or equal to 0.05%,
Al: 0.01 to 0.1%, and
N: greater than 0% and less than or equal to 0.01 %,
optionally, at least a material selected from the group consisting of Cr: greater than 0% and less than or equal to 1%,
Mo: greater than 0% and less than or equal to 1%,
B: greater than 0% and less than or equal to 0.01%,
Ti: greater than 0% and less than or equal to 0.2%,
Nb: greater than 0% and less than or equal to 0.2%,
V: greater than 0% and less than or equal to 0.2%,
Cu: greater than 0% and less than or equal to 1%, and
Ni: greater than 0% and less than or equal to 1%,

a balance of the base steel sheet (2) consists of an iron and inevitable impurities,
(ii) the base steel sheet (2) includes, in order from a base steel sheet side of an interface between the base steel sheet (2) and the plated layer (1),

a soft layer (4) having a Vickers hardness under a load of 3 gf of 90% or less of a Vickers hardness under a load of 3 gf of a t/4 portion of the base steel sheet (2), where t is a thickness of the base steel sheet (2), and
a hard layer (5) formed on the side of the soft layer (4) facing the inner side of the base steel sheet (2) and having a structure containing martensite and bainite as main components, wherein

the soft layer (4) has an average depth D of 20 $\mu$m or more and includes an internal oxide layer (3) containing at least an oxide selected from the group consisting of Si and Mn,
the internal oxide layer (3) has an average depth d of 4 $\mu$m or more and less than D and is formed in a portion directly in contact with the interface between the base steel sheet (2) and the plated layer (1),
the average depth d of the internal oxide layer (3) and the average depth D of the soft layer (4) satisfy a relationship of D > 2d, and
the plated steel sheet has a tensile strength of 980 MPa or more.

2. A method for producing the high-strength plated steel sheet according to claim 1, the method comprising:

a hot rolling step of coiling a steel sheet satisfying steel compositions in the base steel sheet (2) according to claim 1 at 600°C or more to form an internal oxide layer (3) in a surface of the base steel sheet (2);
a step of pickling and cold rolling the steel sheet under a condition of a concentration of a pickling solution from 3 to 20%, a temperature of the pickling solution from 60 to 90°C, a pickling time from 35 to 200 seconds, and a cold rolling percentage from 20 to 70% to remain the internal oxide layer (3) having an average depth d of 4 $\mu$m or more;
a step of oxidizing the steel sheet at an air-fuel ratio of 0.9 to 1.4 in an oxidizing zone; and
a step of soaking the steel sheet in a range from point $Ac_3$ to point $Ac_3$ + 100°C under a reducing atmosphere with a dew point controlled to -30 to -60°C in a reducing zone, wherein
these steps are performed in this order.

3. A method for producing the high-strength plated steel sheet according to claim 1, the method comprising:

a hot rolling step of coiling a steel sheet satisfying steel compositions in the base steel sheet (2) according to claim 1 at 500°C or more;
a step of keeping a temperature of the steel sheet at 500°C or more for 80 minutes or longer to form an internal oxide layer (3) in a surface of the base steel sheet (2);
a step of pickling and cold rolling the steel sheet under a condition of a concentration of a pickling solution from 3 to 20%, a temperature of the pickling solution from 60 to 90°C, a pickling time from 35 to 200 seconds, and a cold rolling percentage from 20 to 70% to remain the internal oxide layer (3) having an average depth d of 4 μm or more;

a step of oxidizing the steel sheet at an air-fuel ratio of 0.9 to 1.4 in an oxidizing zone; and

a step of soaking the steel sheet in a range from point $Ac_3$ to point $Ac_3$ + 100°C under a reducing atmosphere with a dew point controlled to -30 to -60°C in a reducing zone, wherein

these steps are performed in this order.

**Patentansprüche**

1. Hochfestes plattiertes Stahlblech mit einer feuerverzinkten Schicht (1) oder einer legierten feuerverzinkten Schicht (1) auf einer Oberfläche eines Basisstahlblechs (2), wobei

 (i) das Basisstahlblech (2), in Massen-%,

 C: 0,05 bis 0,25%,
 Si: 0,5 bis 2,5%,
 Mn: 2,0 bis 4%,
 P: mehr als 0% und weniger als oder gleich 0,1%,
 S: mehr als 0% und weniger als oder gleich 0,05%,
 Al: 0,01 bis 0,1% und
 N: mehr als 0% und weniger als oder gleich 0,01%,
 gegebenenfalls mindestens ein Material, ausgewählt aus der Gruppe, bestehend aus
 Cr: mehr als 0% und weniger als oder gleich 1%,
 Mo: mehr als 0% und weniger als oder gleich 1%,
 B: mehr als 0% und weniger als oder gleich 0,01%,
 Ti: mehr als 0% und weniger als oder gleich 0,2%,
 Nb: mehr als 0% und weniger als oder gleich 0,2%,
 V: mehr als 0% und weniger als oder gleich 0,2%,
 Cu: mehr als 0% und weniger als oder gleich 1% und
 Ni: mehr als 0% und weniger als oder gleich 1%, enthält,

 ein Rest des Bäsisstahlblechs (2) aus einem Eisen und unvermeidbaren Verunreinigungen besteht,
 (ii) das Basisstahlblech (2), in einer Reihenfolge von einer Basisstahlblechseite einer Grenzfläche zwischen dem Basisstahlblech (2) und der plattierten Schicht (1),

 eine weiche Schicht (4) mit einer Vickershärte unter einer Belastung von 3 gf von 90% oder weniger einer Vickershärte unter einer Belastung von 3 gf eines t/4-Abschnitts des Basisstahlblechs (2), wobei t eine Dicke des Basisstahlblechs (2) ist, und
 eine harte Schicht (5), die auf der Seite der weichen Schicht (4) gebildet ist, die der Innenseite des Basisstahlblechs (2) zugewandt ist, und eine Struktur aufweist, die Martensit und Bainit als Hauptkomponenten enthält, einschließt, wobei

 die weiche Schicht (4) eine durchschnittliche Tiefe D von 20 μm oder mehr aufweist und eine interne Oxidschicht (3) einschließt, die mindestens ein Oxid, ausgewählt aus der Gruppe, bestehend aus Si und Mn, enthält,
 die interne Oxidschicht (3) eine durchschnittliche Tiefe d von 4 μm oder mehr und weniger als D aufweist und in einem Abschnitt gebildet ist, der direkt mit der Grenzfläche zwischen dem Basisstahlblech (2) und der plattierten Schicht (1) in Kontakt steht,
 die durchschnittliche Tiefe d der internen Oxidschicht (3) und die durchschnittliche Tiefe D der weichen Schicht (4) ein Verhältnis von D > 2d erfüllen und das plattierte Stahlblech eine Zugfestigkeit von 980 MPa oder mehr aufweist.

2. Verfahren zur Herstellung des hochfesten plattierten Stahlblechs nach Anspruch 1, wobei das Verfahren umfasst:

 einen Warmwalzschritt des Wickelns eines Stahlblechs, das Stahlzusammensetzungen in dem Basisstahlblech (2) nach Anspruch 1 erfüllt, bei 600°C oder mehr, um eine interne Oxidschicht (3) in einer Oberfläche des Basisstahlblechs (2) zu bilden;

einen Schritt des Beizens und Kaltwalzens des Stahlblechs unter einer Bedingung einer Konzentration einer Beizmittellösung von 3 bis 20%, einer Temperatur der Beizmittellösung von 60 bis 90°C, einer Beizdauer von 35 bis 200 Sekunden und einem Kaltwalzanteil von 20 bis 70%, um die interne Oxidschicht (3) mit einer durchschnittlichen Tiefe d von 4 $\mu$m oder mehr beizubehalten;

einen Schritt des Oxidierens des Stahlblechs bei einem Luft-KraftstoffVerhältnis von 0,9 bis 1,4 in einer Oxidationszone; und

einen Schritt des Durchwärmens des Stahlblechs in einem Bereich von Punkt $Ac_3$ bis Punkt $Ac_3$ + 100°C in einer reduzierenden Atmosphäre mit einem auf -30 bis -60°C gesteuerten Taupunkt in einer Reduktionszone, wobei diese Schritte in dieser Reihenfolge durchgeführt werden.

3. Verfahren zur Herstellung des hochfesten plattierten Stahlblechs nach Anspruch 1, wobei das Verfahren umfasst:

einen Warmwalzschritt des Wickelns eines Stahlblechs, das Stahlzusammensetzungen in dem Basisstahlblech (2) nach Anspruch 1 erfüllt, bei 500°C oder mehr;

einen Schritt des Haltens einer Temperatur des Stahlblechs bei 500°C oder mehr für 80 Minuten oder länger, um eine interne Oxidschicht (3) in einer Oberfläche des Basisstahlblechs (2) zu bilden;

einen Schritt des Beizens und Kaltwalzens des Stahlblechs unter einer Bedingung einer Konzentration einer Beizmittellösung von 3 bis 20%, einer Temperatur der Beizmittellösung von 60 bis 90°C, einer Beizdauer von 35 bis 200 Sekunden und einem Kaltwalzanteil von 20 bis 70%, um die interne Oxidschicht (3) mit einer durchschnittlichen Tiefe d von 4 $\mu$m oder mehr beizubehalten;

einen Schritt des Oxidierens des Stahlblechs bei einem Luft-KraftstoffVerhältnis von 0,9 bis 1,4 in einer Oxidationszone; und

einen Schritt des Durchwärmens des Stahlblechs in einem Bereich von Punkt $Ac_3$ bis Punkt $Ac_3$ + 100°C in einer reduzierenden Atmosphäre mit einem auf -30 bis -60°C gesteuerten Taupunkt in einer Reduktionszone, wobei diese Schritte in dieser Reihenfolge durchgeführt werden.

## Revendications

1. Tôle d'acier plaquée à haute résistance ayant une couche galvanisée à chaud (1) ou une couche alliée galvanisée à chaud (1) sur une surface d'une tôle d'acier de base (2), dans laquelle

(i) la tôle d'acier de base (2) contient, en % en masse,

C : de 0,05 à 0,25%,
Si : de 0,5 à 2,5%,
Mn : de 2,0 à 4%,
P : plus grand que 0% et inférieur ou égal à 0,1%,
S : plus grand que 0% et inférieur ou égal à 0,05%,
Al: de 0,01 à 0,1%, et
N : plus grand que 0% et inférieur ou égal à 0,01%,

optionnellement, au moins un matériau sélectionné parmi le groupe consistant en :

Cr : plus grand que 0% et inférieur ou égal à 1%,
Mo : plus grand que 0% et inférieur ou égal à 1%,
B : plus grand que 0% et inférieur ou égal à 0,01%,
Ti : plus grand que 0% et inférieur ou égal à 0,2%,
Nb : plus grand que 0% et inférieur ou égal à 0,2%,
V : plus grand que 0% et inférieur ou égal à 0,2%,
Cu : plus grand que 0% et inférieur ou égal à 1%, et
Ni : plus grand que 0% et inférieur ou égal à 1%,

le reste de la tôle d'acier de base (2) consistant en du fer et d'inévitables impuretés,
(ii) la tôle d'acier de base (2) inclut, dans l'ordre à partir d'un côté de la tôle d'acier de base d'une interface entre la tôle d'acier de base (2) et la couche plaquée (1),

un couche douce (4) ayant une dureté Vickers sous une charge de 3 gf de 90% ou moins de la dureté Vickers sous une charge de 3 gf d'une portion t/4 de la tôle d'acier de base (2), où t est l'épaisseur de la tôle d'acier de base (2), et
une couche dure (5) formée du côté de la couche douce (4) faisant face au côté intérieur de la tôle d'acier de base (2) et ayant une structure contenant du martensite et du bainite en tant que composants principaux, dans laquelle la couche douce (4) a une profondeur moyenne D de 20$\mu$m ou plus et inclut une couche d'oxyde interne (3) contenant au moins un oxyde sélectionné parmi le groupe consistant en du Si et du Mn,

la couche d'oxyde interne (3) a une profondeur moyenne d de 4 $\mu$m ou plus et inférieure à D et est formée dans une partie directement au contact avec l'interface entre la tôle d'acier de base (2) et la couche plaquée (1),
la profondeur moyenne d de la couche d'oxyde interne (3) et la profondeur moyenne D de la couche douce (4) satisfont la relation D > 2d, et
la tôle d'acier plaquée a une résistance à la traction de 980 MPa ou plus.

2. Procédé de production d'une tôle d'acier plaquée à haute résistance selon la revendication 1, le procédé comprenant :

une étape de laminage à chaud d'enroulement d'une tôle d'acier satisfaisant des compositions d'acier dans la tôle d'acier de base (2) selon la revendication 1 à 600°C ou plus pour former une couche d'oxyde interne (3) dans une surface de la tôle d'acier de base (2) ;
une étape de décapage et de laminage à froid de la tôle d'acier sous condition de concentration d'une solution de décapage de 3 à 20%, de température de la solution de décapage de 60 à 90°C, de temps de décapage de 35 à 200 secondes, et de pourcentage de laminage à froid de 20 à 70% afin de conserver la couche d'oxyde interne (3) ayant une profondeur moyenne d de 4$\mu$m ou plus ;
une étape d'oxydation de la tôle d'acier dans un rapport air-combustible de 0,9 à 1,4 dans une zone d'oxydation ; et
une étape de maintien à température de la tôle d'acier dans une gamme allant du point Ac$_3$ au point Ac$_3$+100°C sous atmosphère réductrice avec un point de rosée contrôlé de -30 à -60°C dans une zone de réduction, dans lequel ces étapes sont réalisées dans cet ordre.

3. Procédé de production d'une tôle d'acier plaquée à haute résistance selon la revendication 1, le procédé comprenant :

une étape de laminage à chaud d'enroulement d'une tôle d'acier satisfaisant des compositions d'acier dans la tôle d'acier de base (2) selon la revendication 1 à 500°C ou plus;
une étape de maintien de la température de la tôle d'acier à 500°C ou plus pendant 80 minutes ou plus pour former une couche d'oxyde interne (3) dans la surface de la tôle d'acier de base (2) ;
une étape de décapage et de laminage à froid de la tôle d'acier sous condition de concentration d'une solution de décapage de 3 à 20%, de température de la solution de décapage de 60 à 90°C, de temps de décapage de 35 à 200 secondes, et de pourcentage de laminage à froid de 20 à 70% afin de conserver la couche d'oxyde interne (3) ayant une profondeur moyenne d de 4$\mu$m ou plus ;
une étape d'oxydation de la tôle d'acier dans un rapport air-combustible de 0,9 à 1,4 dans une zone d'oxydation ; et
une étape de maintien à température de la tôle d'acier dans une gamme allant du point Ac$_3$ au point Ac$_3$+100°C sous atmosphère réductrice avec un point de rosée contrôlé de -30 à -60°C dans une zone de réduction, dans lequel ces étapes sont réalisées dans cet ordre.

FIG.1

## FIG.2

THICKNESS OF INTERNAL OXIDE LAYER

Zn CONTENT    Fe CONTENT

O CONTENT

AVERAGE O CONCENTRATION + 0.02% OF 40–50 $\mu$m PORTION

Fe, Zn CONCENTRATION (%)

O CONCENTRATION (%)

DISTANCE ($\mu$m)FROM SURFACE

Fe
Zn
O

EP 3 020 842 B1

# FIG.3

**EP 3 020 842 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011231367 A
- JP 4943558 B
- CA 2850195 A1